(19) Europäisches Patentamt
European Patent Office
Office européen des brevets

(11) EP 0 834 527 A1

(12) EUROPÄISCHE PATENTANMELDUNG

(43) Veröffentlichungstag:
**08.04.1998 Patentblatt 1998/15**

(51) Int. Cl.$^6$: **C08G 77/38**, C09D 183/06

(21) Anmeldenummer: **97117119.4**

(22) Anmeldetag: **02.10.1997**

(84) Benannte Vertragsstaaten:
**AT BE CH DE DK ES FI FR GB GR IE IT LI LU MC NL PT SE**
Benannte Erstreckungsstaaten:
**AL LT LV RO SI**

(30) Priorität: **04.10.1996 DE 19641067**

(71) Anmelder: **Wacker-Chemie GmbH**
**81737 München (DE)**

(72) Erfinder:
- **Dauth, Jochen, Dr.**
  **84489 Burghausen (DE)**
- **Deubzer, Bernward, Dr.**
  **84489 Burghausen (DE)**
- **Gratzl, Petra**
  **84577 Tuessling (DE)**
- **Wolferseder, Josef**
  **84367 Tann (DE)**

(74) Vertreter:
**Deffner-Lehner, Maria, Dr. et al**
**Wacker-Chemie GmbH,**
**Zentralabteilung PLM,**
**Hanns-Seidel-Platz 4**
**81737 München (DE)**

# (54) Verfahren zur Herstellung von (Meth)acryloxygruppen aufweisenden Organosiliciumverbindungen

(57) Ein neues Verfahren zur Herstellung von (Meth)acryloxygruppen aufweisende Organosiliciumverbindungen wird beschrieben, bei dem alkoxylierte Alk-2-in-di(meth)acrylate-1,4 (1) der Formel

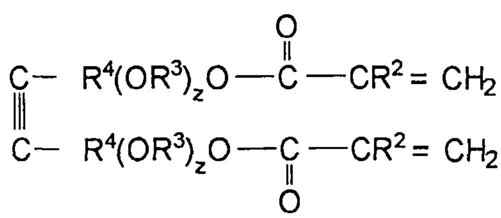

wobei $R^2$, $R^3$, $R^4$ und z die im Anspruch 1 dafür angegebene Bedeutung haben, mit Organosiliciumverbindungen (2) mit Einheiten der Formel

$$H_eR_fSiO_{\frac{4-(e+f)}{2}} \qquad (III)$$

wobei R, e und f die in Anspruch 1 dafür angegebene Bedeutung haben, die mindestens ein Si-gebundenes Wasserstoffatom je Molekül aufweisen,
in Gegenwart von die Anlagerung von Si-gebundenen Wasserstoff an aliphatische Mehrfachbindung fördernde Katalysatoren (3) sowie in Gegenwart von Polymerisationsinhibitoren (4) umgesetzt werden,
wobei alkoxylierte Alk-2-in-di(meth)acrylate-1,4 (1) in Mengen von 1,01 bis 1,5 Mol je Grammatom Si-gebundener Wasserstoff in Organosiliciumverbindung (2) eingesetzt werden.

EP 0 834 527 A1

## Beschreibung

Die Erfindung betrifft ein Verfahren zur Herstellung von (Meth)acryloxygruppen aufweisenden Organosiliciumverbindungen.

Aus EP-A 130 731 ist die Umsetzung von Organopolysiloxan mit Si-gebundenem Wasserstoff mit Beta(allyloxy)ethylmethacrylat in Gegenwart eines Hydrosilylierungskatalysators bekannt. Hierbei werden Methacryloxygruppen aufweisende Organopolysiloxane erhalten. Acryloxygruppen aufweisende Organopolysiloxane sind durch analoge Umsetzung nicht selektiv erhältlich, da die Hydrosilylierung sowohl am Acryl- als auch am Allylrest auftritt.

US-A 5,214,077 beschreibt die Umsetzung von Silanen und Organopolysiloxan mit Si-gebundenem Wasserstoff mit Alkinyloxy(meth)acrylaten in Gegenwart eines Hydrosilylierungskatalysators. Hierbei wird pro Si-Atom maximal eine (Meth)acryl-gruppe addiert.

In DD-A 298 404 wird ein Verfahren zur Herstellung von Siloxanylalkendiyl-bis(meth)acrylaten beschrieben. Hierbei wird Organopolysiloxan mit Si-gebundenem Wasserstoff equimolar mit But-2-in-dimethacrylat-1,4 in Gegenwart eines Hydrosilylierungskatalysators umgesetzt. Es werden dabei toxische organische Monomere, wie But-2-in-dimethacrylat-1,4 und But-2-in-diol-1,4, aus dem durch Umsetzung mit Methacrylsäure das Dimethacrylat erhalten wird, eingesetzt. Durch den eqimolaren Einsatz addiert die SiH-Gruppe im Organopolysiloxan sowohl an der Alkin- als auch an der Acrylatgruppe von But-2-in-dimethacrylat-1,4. Die relativ unpolaren Siliconöle sind schlecht mit kommerziellen Photoinitiatoren mischbar.

In DE-A 44 43 749 wird ein Verfahren zur Herstellung von alkoxylierten Siloxanyl-alkendiyl-bis-(meth)acrylaten beschrieben, bei dem die Siloxanyl-alkendiyl-bis-$\bar{\omega}$-hydroxypolyoxyalkyle mit Methylacrylat unter Zinnkatalyse verestert werden. Da die Veresterung an den Polymeren erfolgt, ist die Veresterung nicht vollständig und die Organosiliciumverbindungen werden über einen längeren Zeitraum thermisch belastet, was partiell zur Polymerisation der Acrylatgruppen führt.

Es bestand die Aufgabe, ein Verfahren zur Herstellung von (Meth)acryloxygruppen aufweisenden Organosiliciumverbindung bereitzustellen, bei dem (Meth)acryloxygruppen aufweisende Organosiliciumverbindungen mit hoher Selektivität, in hohen Ausbeuten und unter Verwendung leicht zugänglicher Ausgangsstoffe, die weniger toxisch als bisher verwendete sind, hergestellt werden können. Weiterhin bestand die Aufgabe, ein Verfahren zur Herstellung von (Meth)acryloxygruppen aufweisenden Organosiliciumverbindungen bereitzustellen, bei dem (Meth)acryloxygruppen aufweisende Organosiliciumverbindungen erhalten werden, welche bei Einwirkung von Licht rasch vernetzen und in denen sich die bei der Vernetzung eingesetzten Photoinitiatoren gut lösen. Die Aufgabe wird durch die Erfindung gelöst.

Gegenstand der Erfindung ist ein Verfahren zur Herstellung von (Meth)acryloxygruppen aufweisenden Organosiliciumverbindungen mit Einheiten der allgemeinen Formel

$$A_aR_bSiX_cO_{\frac{4-(a+b+c)}{2}} \qquad (I),$$

wobei R gleich oder verschieden ist, einen einwertigen, gegebenenfalls halogenierten Kohlenwasserstoffrest mit 1 bis 18 Kohlenstoffatom(en) je Rest bedeutet,
X gleich oder verschieden ist, ein Chloratom oder ein Rest der Formel $-OR^1$ ist, wobei $R^1$ einen Alkylrest mit 1 bis 8 Kohlenstoffatom(en) je Rest, der durch ein Ethersauerstoffatom substituiert sein kann, bedeutet,
a 0 oder 1,
b 0, 1, 2 oder 3,
c 0, 1, 2 oder 3
und die Summe $a+b+c \leq 4$ , bevorzugt die Summe $a+b+c \leq 3$ ist und A ein Rest der Formel

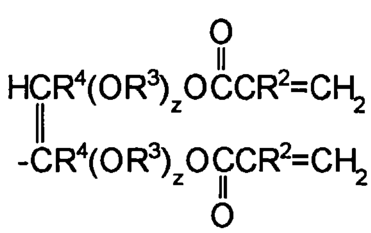

ist, wobei z eine ganze Zahl von 1 bis 12 bedeutet,
$R^2$ ein Wasserstoffatom oder ein Methylrest,
$R^3$ einen linearen oder verzweigten Alkylenrest mit 1 bis 6 Kohlenstoffatom(en) je Rest und
$R^4$ einen linearen oder verzweigten Alkylenrest mit 1 bis 6 Kohlenstoffatom(en) je Rest bedeutet,
wobei mindestens ein Rest A je Molekül enthalten ist,
dadurch gekennzeichnet, daß alkoxylierte
Alk-2-in-di(meth)acrylate-1,4 (1) der allgemeinen Formel

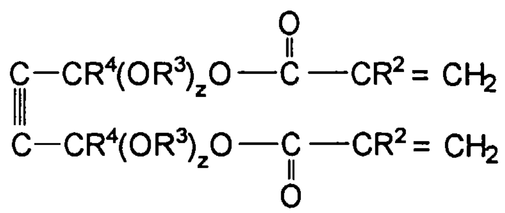

(II)

in der $R^2$, $R^3$, $R^4$ und z die in Formel I angegebenen Bedeutungen besitzen, mit Organosiliciumverbindungen (2) mit Einheiten der Formel

$$H_eR_fSiO_{\frac{4-(e+f)}{2}} \qquad (III)$$

wobei R die in Formel (I) angegebene Bedeutung hat,
e 0 oder 1, durchschnittlich 0,01 bis 1,0
f 0, 1, 2 oder 3 durchschnittlich 0,0 bis 3,0 und
die Summe e + f nicht größer als 4, bevorzugt die Summe e + f nicht größer als 3 ist,
wobei die Organosiliciumverbindungen der Formel (III) mindestens ein Si-gebundenes Wasserstoffatom je Molekül aufweisen, in Gegenwart von die Anlagerung von Si-gebundenen Wasserstoff an aliphatische Mehrfachbindung fördernde Katalysatoren (3) sowie in Gegenwart von Polymerisationsinhibitoren (4) umgesetzt werden,
mit der Maßgabe, daß alkoxylierte
Alk-2-in-di(meth)acrylate-1,4 (1) in Mengen von 1,01 bis 1,5 Mol je Grammatom Si-gebundener Wasserstoff in Organosiliciumverbindung (2) eingesetzt werden.

Die erfindungsgemäßen Organosiliciumverbindungen besitzen vorzugsweise ein durchschnittliches Molekulargewicht von 500 bis 1 000 000 g/mol, bevorzugt 5 000 bis 150 000 g/mol und vorzugsweise eine Viskosität von 10 bis 1 000 000 $mm^2 \cdot s^{-1}$ bei 25°C, bevorzugt 20 bis 100 000 $mm^2 \cdot s^{-1}$ bei 25°C, besonders bevorzugt 50 bis 2000 $mm^2 \cdot s^{-1}$ bei 25 °C.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert. Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylreste und Methylcyclohexylreste; Arylreste, wie der Phenyl-, Naphthyl- und Anthryl- und Phenanthrylrest; Alkarylreste, wie o-, m-, p-Tolylreste; xylylreste und Ethylphenylreste; und Aralkylreste, wie der Benzylrest, der $\alpha$- und der $\beta$-Phenylethylrest. Bevorzugt ist der Methylrest.

Beispiele für halogenierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest.

Beispiele für Alkylreste $R^1$ sind Methyl-, Ethyl-, n-Propyl-, iso-Propyl-, 1-n-Butyl-, 2-n-Butyl-, iso-Butyl-, tert.-Butylreste. Bevorzugt sind der Methyl- und Ethylrest. Beispiele für Alkylreste $R^1$, die durch ein Ethersauerstoffatom substituiert sind, sind der Methoxyethyl- und Ethoxyethylrest.

Bevorzugt ist der Rest $R^2$ ein Wasserstoffatom.

Beispiele für Reste $R^3$ sind Alkylenreste der Formel $-(CH_2)_4-$, $-CH_2-CH_2-$, $-CH_2-CH_2-CH_2-$, $-C(CH_3)HCH_2-$. Bevorzugt ist $R^3$ ein Rest der Formel $-CH_2-CH_2-$.

Beispiele für Alkylenreste $R^4$ sind solche der Formel $-CH_2-$, $-CH(CH_3)-$, $-C(CH_3)_2-$, $-C(CH_3)(C_2H_5)-$, $-(CH_2)_2-$ und $-(CH_2)_4-$, wobei der Rest der Formel $-CH_2-$ bevorzugt ist.

Bevorzugt ist z eine ganze Zahl von 1 bis 6, besonders bevorzugt eine ganze Zahl von 2 bis 4.

Beispiele für Reste A sind solche der Formel

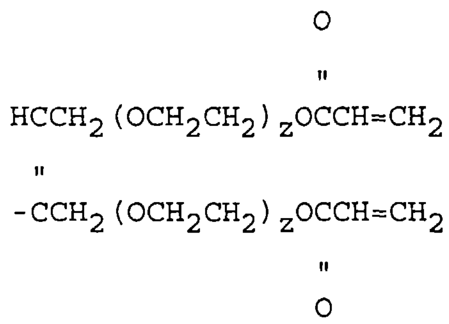

und

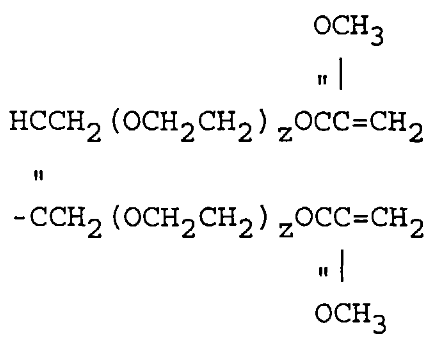

wobei z die oben dafür angegebene Bedeutung hat, bevorzugt eine ganze Zahl von 1 bis 6, besonders bevorzugt 2 bis 4 ist.

Vorzugsweise sind die bei dem erfindungsgemäßen Verfahren erhaltenen Organosiliciumverbindungen Organopolysiloxane.

Bevorzugt als (Meth)acryloxygruppen aufweisende Organopolysiloxane sind solche der Formel

$$A_gR_{3-g}SiO(SiR_2O)_n(SiRAO)_mSiR_{3-g}A_g \qquad (IV)$$

wobei A und R die oben dafür angegebene Bedeutung haben,
g 0 oder 1,
n 0 oder eine ganze Zahl von 1 bis 1500 und
m 0 oder eine ganze Zahl von 1 bis 100 ist,
mit der Maßgabe, daß mindestens ein Rest A je Molekül enthalten ist.

Vorzugsweise werden bei dem erfindungsgemäßen Verfahren als Organosiliciumverbindungen der Formel (III) Organopolysiloxane eingesetzt.

Die Organopolysiloxane der Formel (III) mit mindestens einem Si-gebundenen Wasserstoffatom je Molekül enthalten vorzugsweise mindestens 0,01 Gew.-%, bevorzugt 0,02 bis 1,6 Gew.-% Si-gebundenen Wasserstoff, und ihre durchschnittliche Viskosität beträgt vorzugsweise 5 bis 20 000 $mm^2 \cdot s^{-1}$ bei 25°C, bevorzugt 5 bis 2 000 $mm^2 \cdot s^{-1}$ bei 25°C, besonders bevorzugt 5 bis 800 $mm^2.s^{-1}$ bei 25°C.

Bevorzugt werden als Organopolysiloxane mit mindestens einem Si-gebundenen Wasserstoffatom je Molekül solche der Formel

$$H_hR_{3-h}SiO(SiR_2O)_o(SiRHO)_pSiR_{3-h}H_h \qquad (V)$$

wobei R die oben dafür angegebene Bedeutung hat,
h 0 oder 1,
o 0 oder eine ganze Zahl von 1 bis 1500 und
p 0 oder eine ganze Zahl von 1 bis 100 ist, verwendet.

Die alkoxylierten Alk-2-in-di(meth)acrylate-1,4 (1) werden bei dem erfindungsgemäßen Verfahren im Überschuß eingesetzt, bevorzugt 1,01 bis 1,2 Mol je Grammatom Si-gebundener Wasserstoff in Organosiliciumverbindung (2).

Die erfindungsgemäß verwendeten alkoxylierten Alk-2-in-di(meth)acrylate-1,4 besitzen eine wesentlich geringere Toxizität und Flüchtigkeit und höhere Polarität als Alk-2-in-di(meth)acrylate-1,4.

Die bei dem erfindungsgemäßen Verfahren eingesetzten alkoxylierten Alk-2-in-di(meth)acrylate-1,4 sind nach allgemeinen Verfahren aus dem Stand der Technik herstellbar: Dabei wird das alkoxylierte Alk-in-diol, z.B. das ethoxylierte But-2-in-diol-1,4, mit Acrylsäure unter saurer Katalyse verestert. Das Reaktionswasser wird azeotrop entfernt.

Beispiele für die bei dem erfindungsgemäßen Verfahren eingesetzten alkoxylierten Alk-2-in-di(meth)acrylate-1,4 (1) sind solche der Formel

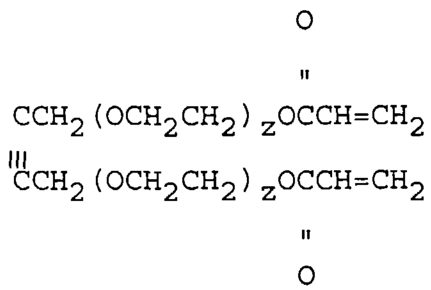

und

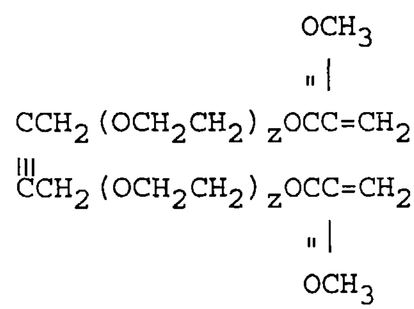

wobei z die oben dafür angegebene Bedeutung hat, bevorzugt eine ganze Zahl von 1 bis 6, besonders bevorzugt 2 bis 4 ist.

Bei dem erfindungsgemäßen Verfahren werden als die Anlagerung von Si-gebundenem Wasserstoff an aliphatische Mehrfachbindung fördernde Katalysatoren (3) die gleichen Katalysatoren eingesetzt, die auch bisher zur Förderung der Anlagerung von Si-gebundenem Wasserstoff an aliphatische Mehrfachbindung eingesetzt wurden. Bei den Katalysatoren handelt es sich vorzugsweise um ein Metall aus der Gruppe Platinmetalle oder um eine Verbindung oder einen Komplex aus der Gruppe Platinmetalle. Beispiele für solche Katalysatoren sind metallisches und feinverteiltes Platin, das sich auf Trägern wie Siliciumdioxyd, Aluminiumoxyd oder Aktivkohle befinden kann, Verbindungen oder Komplexe von Platin, wie Platinhalogenide, z.B. $PtCl_4$, $H_2PtCl_6*6H_2O$, $Na_2PtCl_4*4\ H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6*6H_2O$ und Cyclohexanon, Platin-Vinylsiloxankomplexe, wie Platin-1,3-Divinyl-1,1,3,3-tetramethyldisiloxan-komplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid, Cyclooctadien-Platindichlorid, Norbornadien-Platindichlorid, Gammapicolin-Platindichlorid, Cyclopentadien-Platindichlorid sowie Umsetzungsprodukte von Platintetrachlorid mit Olefin und primärem Amin oder sekundärem Amin oder primärem und sekundärem Amin gemäß US-A 4,292,434, wie das Umsetzungsprodukt aus in 1-Octen gelöstem Platintetrachlorid mit sec.-Butylamin, oder Ammonium-Platinkomplexe gemäß EP-B 110 370.

Bei dem erfindungsgemäßen Verfahren wird der Katalysator (3) vorzugsweise in Mengen von 2 bis 200 Gew.-ppm (Gewichtsteilen je Million Gewichtsteilen), bevorzugt in Mengen von 5 bis 50 Gew.-ppm, jeweils berechnet als elementares Platin und bezogen auf das Gesamtgewicht von alkoxyliertem Alkindiacrylat (1) und Organosiliciumverbindung (2) eingesetzt.

Als Polymerisationsinhibitor (4) werden bei dem erfindungsgemäßen Verfahren vorzugsweise phenolische Stabilisatoren wie Kresol- bzw. Hydrochinonderivate, z.B. Bis-(tert. butyl)-kresol, 2,5-Di-tert. butyl-hydrochinon oder der Monomethylether des Hydrochinons oder Phenothiazin in einer Konzentration von 0,001 bis 1 Gew.-%, bevorzugt von 0,002 bis 0,5 Gew.-%, bezogen auf das Gesamtgewicht von alkoxyliertem Alkindiacrylat (1) und Organosiliciumverbindung (2), eingesetzt.

Das erfindungsgemäße Verfahren wird vorzugsweise beim Druck der umgebenden Atmosphäre, also etwa bei 1020 hpa(abs.) durchgeführt. Es kann aber auch bei höheren oder niedrigeren Drükken durchgeführt werden.

Ferner wird das erfindungsgemäße Verfahren vorzugsweise bei einer Temperatur von 50°C bis 180°C, bevorzugt 80°C bis 150°C durchgeführt.

Bei den erfindungsgemäßen Verfahren können inerte, organische Lösungsmittel mitverwendet werden. Beispiel für inerte organische Lösungsmittel sind Toluol, Xylol, Octanisomere und n-Butylacetat.

Bei den erfindungsgemäßen Verfahren könnten Alkali- und Erdalkalisalze mitverwendet werden. Beispiele sind Natriumacetat und Natriumhydrogencarbonat.

Die nach dem erfindungsgemäßen Verfahren erhaltenen (Meth)-acryloxygruppen aufweisenden Organopolysiloxane können mit Organopolysiloxanen (5), ausgewählt aus der Gruppe bestehend aus linearen, endständigen Triorganosiloxygruppen aufweisenden Organopolysiloxanen, linearen, endständige Hydroxylgruppen aufweisenden Organopolysiloxanen, cyclischen Organopolysiloxanen und Mischpolymerisaten aus Diorganosiloxan- und Monoorganosiloxaneinheiten, equilibriert werden.

Vorzugsweise werden als lineare, endständige Triorganosiloxygruppen aufweisende Organopolysiloxane solche der Formel

$$R_3SiO(SiR_2O)_rSiR_3$$

wobei R die oben dafür angegebene Bedeutung hat und
r 0 oder eine ganze Zahl im Wert von 1 bis 1500 ist,
als lineare, endständige Hydroxylgruppen aufweisende Organopolysiloxane solche der Formel

$$HO(SiR_2O)_sH$$

wobei R die oben dafür angegebene Bedeutung hat und
s eine ganze Zahl im Wert von 1 bis 1500 ist,
als cyclische Organopolysiloxane solche der Formel

$$(R_2SiO)_t$$

wobei R die oben dafür angegebene Bedeutung hat und
t eine ganze Zahl im Wert von 3 bis 12 ist,
und als Mischpolymerisate solche aus Einheiten der Formel

$$R_2SiO \text{ und } RSiO_{3/2}$$

wobei R die oben dafür angegebene Bedeutung hat, eingesetzt.

Die Mengenverhältnisse der bei der gegebenenfalls durchgeführten Equilibrierung eingesetzten Organopolysiloxane und (Meth)acryloxygruppen aufweisenden Organopolysiloxane werden lediglich durch den gewünschten Anteil der (Meth)acrylgruppen in den bei der gegebenenfalls durchgeführten Equilibrierung erzeugten Organopolysiloxanen und durch die gewünschte mittlere Kettenlänge bestimmt.

Bei der gegebenenfalls durchgeführten Equilibrierung werden vorzugsweise saure Katalysatoren, welche die Equilibrierung fördern, eingesetzt. Beispiele für solche Katalysatoren sind Schwefelsäure, Phosphorsäure, Trifluormethansulfonsäure, Phosphornitridchloride und unter den Reaktionsbedingungen feste, saure Katalysatoren, wie säureaktivierte Bleicherde, saure Zeolithe, sulfonierte Kohle und sulfoniertes Styrol-Divinylbenzol-Mischpolymerisat. Bevorzugt sind Phosphornitridchloride. Phosphornitridchloride werden vorzugsweise in Mengen von 5 bis 1000 Gew.-ppm (= Teile je Million), insbesondere 50 bis 200 Gew.-ppm, jeweils bezogen auf das Gesamtgewicht der eingesetzten Organosiliciumverbindungen, verwendet. Die Verwendung basischer Equilibrierungskatalysatoren ist zwar möglich, jedoch nicht bevorzugt.

Die gegebenenfalls durchgeführte Equilibrierung wird vorzugsweise bei 80°C bis 150°C und beim Druck der umgebenden Atmosphäre, also etwa bei 1020 hPa(abs.), durchgeführt. Falls erwünscht, können aber auch höhere oder niedrigere Drücke angewendet werden. Das Equilibrieren wird vorzugsweise in 5 bis 80 Gew.-%, bezogen auf das Gesamtgewicht der jeweils eingesetzten Organosiliciumverbindungen, in mit Wasser nicht mischbarem Lösungsmittel, wie Toluol, durchgeführt.

Vor dem Aufarbeiten des bei dem Equilibrieren erhaltenen Gemisches kann der Katalysator unwirksam gemacht werden.

Das erfindungsgemäße Verfahren kann absatzweise, halbkontinuierlich oder vollkontinuierlich durchgeführt werden.

Die nach dem erfindungsgemäßen Verfahren hergestellten (Meth)acryloxygruppen aufweisenden Organosiliciumverbindungen können in durch Bestrahlung mit Licht vernetzbaren Zusammensetzungen enthaltend

(A) (Meth)acryloxygruppen aufweisende Organopolysiloxane und
(B) Photosensibilisatoren

eingesetzt werden.
Die durch Bestrahlung mit Licht vernetzbaren Zusammensetzungen können zur Herstellung von Überzügen verwendet werden.

Vorzugsweise werden die erfindungsgemäßen (Meth)acryloxygruppen aufweisenden Organopolysiloxane durch Ultraviolettlicht vernetzt, wobei solches mit Wellenlängen im Bereich von 200 bis 400 nm bevorzugt ist. Das Ultraviolettlicht kann z.B. in Xenon-, Quecksilbernieder-, Quecksilbermittel- oder Quecksilberhochdrucklampen erzeugt werden. Zur Vernetzung durch Licht ist auch solches mit einer Wellenlänge von 400 bis 600 nm, also sogenanntes "Halogenlicht", geeignet.

Bei den zur Vernetzung der erfindungsgemäßen Organopolysiloxanen geeigneten Energiequellen kann es sich aber auch um Röntgen-, Gamma- oder Elektronenstrahlen oder um gleichzeitige Anwendung von mindestens zwei verschiedenen Arten solcher Strahlen handeln. Zusätzlich zu der energiereichen Strahlung kann Wärmezufuhr, einschließlich Wärmezufuhr mittels Infrarotlicht, angewendet werden. Eine solche Wäremezufuhr ist jedoch keineswegs erforderlich und vorzugsweise unterbleibt sie, um den Aufwand für Energie zu verringern.

Geeignete Photosensibilisatoren sind gegebenenfalls substituierte Acetophenone, Propiophenone, Benzophenone, Anthrachinone, Benzile, Carbazole, Xanthone, Thioxanthone, Fluorene, Fluorenone, Benzoine, Naphthalinsulfonsäuren, Benzaldehyde und Zimtsäuren.

Beispiele hierfür sind Fluorenon, Fluoren, Carbazol; Acetophenon; substituierte Acetophenone, wie 3-Methylacetophenon, 2,2'-Dimethoxy-2-phenylacetophenon, 4-Methylacetophenon, 3-Bromacetophenon, 4-Allylacetophenon, p-Diacetylbenzol, p-tert.-Butyltrichloracetophenon; Propiophenon; substituierte Propiophenone, wie 1-[4-(Methylthio)phenyl]-2-morpholinpropanon-1, Benzophenon; substituierte Benzophenone, wie Michlers Keton, 3-Methoxybenzophenon, 4,4'-Dimethylaminobenzophenon, 4-Methylbenzophenon, 4-Chlorbenzophenon, 4,4'-Dimethoxybenzophenon, 4-Chlor-4'-benzylbenzophenon; Xanthon; substituierte Xanthone, wie 3-Chlorxanthon, 3,9-Dichlorxanthon, 3-Chlor-8-nonylxanthon; Thioxanthon; substituierte Thioxanthone, wie Isopropylthioxanthon; Anthrachinon; substituierte Anthrachinone, wie Chloranthrachinon und Anthrachino-1,5-disulfonsäuredinatriumsalz; Benzoin; substituierte Benzoine, wie Benzoinmethylether; Benzil; 2-Naphtalinsulfonylchlorid; Benzaldehyd; Zimtsäure.

Photosensibilisatoren werden vorzugsweise in Mengen von 0,01 bis 10 Gew.-%, insbesondere von 0,5 bis 5 Gew.-%, jeweils bezogen auf das Gesamtgewicht der zu vernetzenden Organopolysiloxane, eingesetzt.

Aus Gründen der besseren Handhabung ist es bevorzugt, die erfindungsgemäßen Organosiliciumverbindungen mit geringen Mengen einer inhibierenden Komponente zu versetzen, um beispielsweise vorzeitige Vernetzung einer verwendungsfähigen Formulierung während deren Lagerung zu verhindern. Beispiele für gegebenenfalls eingesetzte Inhibitoren sind alle gebräuchlichen auch bisher in radikalisch ablaufenden Prozessen eingesetzten Inhibitoren, wie Hydrochinon, 4-Methoxyphenol, 2,6-Ditert.butyl-4-methylphenol oder Phenothiazin. Vorzugsweise werden Inhibitoren in Mengen von 10 bis 10.000 ppm, besonders bevorzugt 50 bis 600 ppm, jeweils bezogen auf das Gesamtgewicht der erfindungsgemäßen Organosiliciummasse, eingesetzt.

Beispiele für Oberflächen, auf welche die Überzüge aufgebracht werden können, sind diejenigen von Papier, Holz, Kork, Kunststoffolien, z.B. Polyethylenfolien oder Polypropylenfolien, keramischen Gegenständen, Glas, einschließlich Glasfasern, Metallen, Pappen, einschließlich solcher aus Asbest, und von gewebtem und ungewebtem Tuch aus natürlichen oder synthetischen organischen Fasern. Anwendung finden die erfindungsgemäßen Überzüge beispielsweise in der Trennpapierbeschichtung.

Das Auftragen der durch Bestrahlung mit Licht vernetzbaren Zusammensetzungen auf die zu überziehenden Oberflächen kann in beliebiger, für die Herstellung von Überzügen aus flüssigen Stoffen geeigneter und vielfach bekannter Weise erfolgen, beispielsweise durch Tauchen, Streichen, Gießen, Sprühen, Aufwalzen, Drucken, z.B. mittels einer Offsetgravurüberzugsvorrichtung, Messer- oder Rakelbeschichtung.

Weiterhin können die nach dem erfindungsgemäßen Verfahren hergestellten (Meth)acryloxygruppen aufweisenden Organosiliciumverbindungen als Additive in Lacken, bei der Textil- und Lederverarbeitung und in der Elektronikindustrie verwendet werden.

Alle Reaktionszeiten in den folgenden Beispielen beziehen sich auf den vollständigen Umsatz von SiH-Gruppen.

Alle Mol-% Angaben in den folgenden Beispielen beziehen sich auf umgesetzte SiH-Gruppen.

Beispiel 1:

30.0 g eines endterminierten, wasserstoffhaltigen Polydimethylsiloxanes mit einem Wasserstoffgehalt von 0.027 Gew.-% (0.8 x $10^{-2}$ mol Wasserstoff) und einer Viskosität von 171 $mm^2/s$ bei 25°C, 3.38 g eines ethoxylierten Butindioldiacrylates mit einem Molekulargewicht von 400 g/mol (0.844 x $10^{-2}$ mol C ≡ C), 1.01 x $10^{-3}$ g Hydrochinonmonomethylether (300 ppm bezogen auf Diacrylateinwaage), 0.067 g (0.798 x $10^{-3}$ mol) Natriumhydrogencarbonat, 13.52 g (0.147 mol) Toluol und 85.56 µl (20 ppm Platin, bezogen auf reines Metall) einer Lösung von Hexachloroplatinsäure in Isopropanol mit einem Platingehalt von 1 Gew.-% werden im Reaktionsgefäß unter Rühren auf 110°C temperiert. Nach 20 Minuten Reaktionszeit bei 110°C wird die Reaktionsmischung filtriert und im Hochvakuum bei 100°C bis zur Gewichtskonstanz eingeengt. Man erhält 27.93 g (84 % der Theorie) eines klaren, farblosen, geruchlosen Öles mit einer Viskosität von 450 $mm^2/s$, das im $^{29}Si$-NMR keine SiOC-Verknüpfung und im $^{1}H$-NMR kein Additionsprodukt von SiH an die Acrylatgruppen aufweist.

Vergleichsbeispiel 1 (DD-A 298 404):

30.0 g eines endterminierten , wasserstoffhaltigen Polydimethylsiloxanes mit einem Wasserstoffgehalt von 0.027 Gew.-% (0.8 x $10^{-2}$ mol Wasserstoff) und einer Viskosität von 171 $mm^2/s$ bei 25°C, 1.56 g Butindioldiacrylat (0.8 x $10^{-2}$ mol C ≡ C), 0.47 mg (300 ppm bezogen auf Diacrylateinwaage) Hydrochinonmonomethylether, 6.25 g (0.678 mol) Toluol und 80.92 µl (20 ppm Platin, bezogen auf reines Metall) einer Lösung von Hexachloroplatinsäure in Isopropanol mit einem Platingehalt von 1 Gew.-% werden im Reaktionsgefäß unter Rühren auf 110°C temperiert. Nach 35 Minuten Reaktionszeit bei 110°C wird die Reaktionsmischung filtriert und im Hochvakuum bei 100°C bis zur Gewichtskonstanz eingeengt. Man erhält 25.57 g (81 % der Theorie) eines klaren, schwach gelben Öles mit typischem Acrylatgeruch und einer Viskosität von 241 $mm^2/s$ bei 25°C, das im $^{29}Si$-NMR 6.24 Mol-% SiOC-Verknüpfung und im $^{1}H$-NMR kein Additionsprodukt von SiH an die Acrylatgruppen aufweist.

Beispiel 2:

9.59 g (0.024 mol C ≡ C) eines ethoxylierten Butindioldiacrylates mit einem Molekulargewicht von 400 g/mol, 3.84 x $10^{-3}$ g (400 ppm bezogen auf Diacrylateinwaage) Hydrochinonmonomethylether, 3.9 x $10^{-2}$ g, (4.8 x $10^{-4}$ mol) Natriumacetat, 7.0 g (0.076 mol) Toluol und 75.35 µl (30 ppm Platin, bezogen auf reines Metall) einer Lösung von Hexachloroplatinsäure in Isopropanol mit einem Platingehalt von 1 Gew.-% werden im Reaktionsgefäß unter Rühren auf 110°C temperiert. Dann werden in einer Rate von einem Gramm pro Minute 10 g eines endterminierten, wasserstoffhaltigen Polydimethylsiloxanes mit einem Wasserstoffgehalt von 0.23 Gew.-% (0.0228 mol Wasserstoff) und einer Viskosität von 7.2 $mm^2/s$ bei 25°C zugetropft. Nach 40 Minuten Reaktionszeit bei 110°C wird die Reaktionsmischung filtriert und im Hochvakuum bei 100°C bis zur Gewichtskonstanz eingeengt. Man erhält 11.5 g (60 % der Theorie) eines klaren, schwach gelben, geruchlosen Öles mit einer Viskosität von 123 $mm^2/s$ bei 25°C, das im $^{29}Si$-NMR keine SiOC-Verknüpfung und im $^{1}H$-NMR kein Additionsprodukt von SiH an die Acrylatgruppe aufweist.

Vergleichsbeispiel 2 (DD-A 298 404):

4.43 g (0.0228 mol) Butindioldiacrylat, 1.33 mg (400 ppm bezogen auf Diacrylateinwaage) Hydrochinonmonomethylether, 3.3 g (0.036 mol) Toluol und 55.5 µl (30 ppm Platin, bezogen auf reines Metall) einer Lösung von Hexachloroplatinsäure in Isopropanol mit einem Platingehalt von 1 Gew.-% werden im Reaktionsgefäß unter Rühren auf 110°C temperiert. Dann werden in einer Rate von einem Gramm pro Minute 10 g eines endterminierten, wasserstoffhaltigen Polydimethylsiloxanes mit einem Wasserstoffgehalt von 0.23 Gew.-% (0.0228 mol Wasserstoff) und einer Viskosität von 7.2 $mm^2/s$ bei 25°C zugetropft. Nach 40 Minuten Reaktionszeit bei 110°C wird die Reaktionsmischung filtriert und im Hochvakuum bei 100°C bis zur Gewichtskonstanz eingeengt. Man erhält 8.39 g (58 % der Theorie) eines klaren, gelben Öles mit starkem Acrylatgeruch und einer Viskosität von 26 $mm^2/s$ bei 25°C, das im $^{29}Si$-NMR 2.0 Mol-% SiOC-Verknüpfung und im $^{1}H$-NMR 3.8 Mol-% des Additionsproduktes von SiH an die Acrylatgruppen aufweist.

Beispiel 3:

20.0 g eines seitenständigen, wasserstoffhaltigen Polydimethylsiloxanes mit einem Wasserstoffgehalt von 0.057 Gew.-% (0.0113 mol Wasserstoff) und einer Viskosität von 395 $mm^2/s$ bei 25°C, 4.98 g eines ethoxylierten Butindioldiacrylates mit einem Molekulargewicht von 400 g/mol (0.0124 mol C ≡ C), 1.49 x $10^{-3}$ g Hydrochinonmonomethylether (300 ppm bezogen auf Diacrylateinwaage), 0.05 g (0.61 x $10^{-3}$ mol) Natriumacetat, 19.92 g (0.216 mol) Toluol und 96.08 µl (30 ppm Platin, bezogen auf reines Metall) einer Lösung von Hexachloroplatinsäure in Isopropanol mit einem Platingehalt von 1 Gew.-% werden im Reaktionsgefäß unter Rühren auf 110°C temperiert. Nach 35 Minuten Reaktionszeit bei 110°C wird die Reaktionsmischung filtriert und im Hochvakuum bei 100°C bis zur Gewichtskonstanz eingeengt. Man erhält 18.16 g (74 % der Theorie) eines klaren, farblosen, geruchlosen Öles mit einer Viskosität von 2130 $mm^2/s$ bei 25°C, das im $^{29}Si$-NMR keine SiOC-Verknüpfung und im $^1H$-NMR kein Additionsprodukt von SiH an die Acrylatgruppe aufweist.

Vergleichsbeispiel 3 (DD-A 298 404):

20.0 g eines seitenständigen, wasserstoffhaltigen Polydimethylsiloxanes mit einem Wasserstoffgehalt von 0.057 Gew.-% (0.0113 mol Wasserstoff) und einer Viskosität von 395 $mm^2/s$ bei 25°C, 2.19 g (0.0113 mol C ≡ C) Butindioldiacrylat, 0.66 mg (300 ppm bezogen auf Diacrylateinwaage) Hydrochinonmonomethylether, 8.76 g (0.095 mol) Toluol und 85.35 µl (30 ppm Platin, bezogen auf reines Metall) einer Lösung von Hexachloroplatinsäure in Isopropanol mit einem Platingehalt von 1 Gew.-% werden im Reaktionsgefäß unter Rühren auf 110°C temperiert.

Nach 50 Minuten Reaktionszeit bei 110°C wird die Reaktionsmischung filtriert und im Hochvakuum bei 100°C bis zur Gewichtskonstanz eingeengt. Man erhält 15.39 g (69 % der Theorie) eines klaren, gelben Öles mit typischem Acrylatgeruch und einer Viskosität von 5640 $mm^2/s$ bei 25°C, das im $^{29}Si$-NMR 1.8 Mol-% SiOC-Verknüpfung und im $^1H$-NMR 0.4 Mol-% des Additionsproduktes von SiH an die Acrylatgruppen aufweist.

Beispiel 4:

30 g eines Siliconharzes mit Silicondioxid- und Hydrogendimethylsiloxyeinheiten und einem Wasserstoffgehalt von 0.05 Gew.-% (0.0149 mol Wasserstoff), 7.16 g (0.0164 mol C ≡ C) eines ethoxylierten Butindioldiacrylates mit einem Molekulargewicht von 400 g/mol, 1.43 x $10^{-3}$ g (200 ppm bezogen auf Diacrylateinwaage) Hydrochinonmonomethylether, 0.07 g (0.833 x $10^{-3}$ mol) Natriumhydrogencarbonat, 60 g (0.651 mol) Toluol und 95.28 µl (20 ppm Platin, bezogen auf reines Metall) einer Lösung von Hexachloroplatinsäure in Isopropanol mit einem Platingehalt von 1 Gew.-% werden im Reaktionsgefäß unter Rühren auf 110°C temperiert. Nach einer Stunde Reaktionszeit bei 110°C wird die Reaktionsmischung filtriert und im Hochvakuum bei 100°C bis zur Gewichtskonstanz eingeengt. Man erhält 35.1 g (94.4 % der Theorie) eines weißen, geruchlosen Festharzes.

Die nach dem erfindungsgemäßen Verfahren hergestellten Organosiliciumverbindungen zeichnen sich, durch den Überschuß an Dreifachbindungsequivalent, im Vergleich zu DD-A 298 404, durch niedrige bis keine SiOC-Verknüpfungen und SiH-Acrylat-Additionsprodukte aus. Das Verfahren gewährleistet geringere Reaktionszeiten und damit eine geringere thermische Belastung der Acrylatverbindungen, was zur Verfahrenssicherheit beiträgt. Die nach dem erfindungsgemäßen Verfahren hergestellten Produkte sind zumeist farblos, klar und geruchlos.

**Patentansprüche**

**1.** Verfahren zur Herstellung von (Meth)acryloxygruppen aufweisenden Organosiliciumverbindungen mit Einheiten der allgemeinen Formel

$$A_aR_bSiX_cO_{\frac{4-(a+b+c)}{2}} \qquad (I),$$

wobei R gleich oder verschieden ist, einen einwertigen, gegebenenfalls halogenierten Kohlenwasserstoffrest mit 1 bis 18 Kohlenstoffatom(en) je Rest bedeutet,
X gleich oder verschieden ist, ein Chloratom oder ein Rest der Formel $-OR^1$ ist, wobei $R^1$ einen Alkylrest mit 1 bis 8 Kohlenstoffatom(en) je Rest, der durch ein Ethersauerstoffatom substituiert sein kann, bedeutet,
a 0 oder 1,
b 0, 1, 2 oder 3,
c 0, 1, 2 oder 3
und die Summe a+b+c ≤ 4 ist und
A ein Rest der Formel

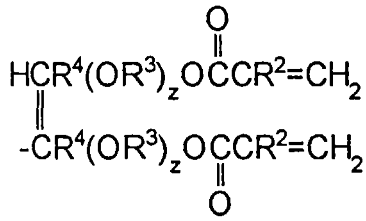

ist, wobei z eine ganze Zahl von 1 bis 12 bedeutet,
$R^2$ ein Wasserstoffatom oder ein Methylrest,
$R^3$ einen linearen oder verzweigten Alkylenrest mit 1 bis 6 Kohlenstoffatom(en) je Rest und
$R^4$ einen linearen oder verzweigten Alkylenrest mit 1 bis 6 Kohlenstoffatom(en) je Rest bedeutet,
wobei mindestens ein Rest A je Molekül enthalten ist,
dadurch gekennzeichnet, daß alkoxylierte Alk-2-in-di(meth)acrylate-1,4 (1) der allgemeinen Formel

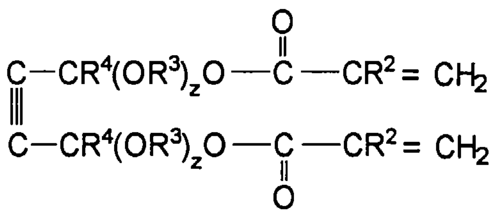

(II)

in der $R^2$, $R^3$, $R^4$ und z die in Formel I angegebenen Bedeutung besitzen, mit Organosiliciumverbindungen (2) mit Einheiten der Formel

$$H_eR_fSiO_{\frac{4-(e+f)}{2}} \qquad (III)$$

wobei R die in Formel (I) angegebene Bedeutung hat,
e 0 oder 1, durchschnittlich 0,01 bis 1,0
f 0, 1, 2 oder 3 durchschnittlich 0,0 bis 3,0 und
die Summe e + f nicht größer als 4 ist,
wobei die Organosiliciumverbindungen der Formel (III) mindestens ein Si-gebundenes Wasserstoffatom je Molekül aufweisen,
in Gegenwart von die Anlagerung von Si-gebundenen Wasserstoff an aliphatische Mehrfachbindung fördernde Katalysatoren (3)
sowie in Gegenwart von Polymerisationsinhibitoren (4) umgesetzt werden,
mit der Maßgabe, daß alkoxylierte
Alk-2-in-di(meth)acrylate-1,4 (1) in Mengen von 1,01 bis 1,5 Mol je Grammatom Si-gebundener Wasserstoff in Organosiliciumverbindung (2) eingesetzt werden.

**2.** Verfahren nach Anspruch 1, dadurch gekennzeichnet, daß als alkoxylierte Alk-2-in-di(meth)acrylate-1,4 (1) solche der Formel

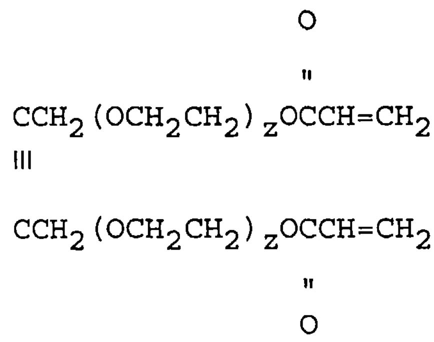

wobei z eine ganze Zahl von 1 bis 12 bedeutet, eingesetzt werden.

3. Verfahren nach Anspruch 1 oder 2, dadurch gekennzeichnet, daß als Organosiliciumverbindungen (2) Organopolysiloxane mit mindestens einem Si-gebundenen Wasserstoffatom je Molekül der allgemeinen Formel

$$H_hR_{3-h}SiO(SiR_2O)_o(SiRHO)_pSiR_{3-h}H_h \qquad (V)$$

wobei R die im Anspruch 1 dafür angegebene Bedeutung hat,
h 0 oder 1,
o 0 oder eine ganze Zahl von 1 bis 1500 und
p 0 oder eine ganze Zahl von 1 bis 100 ist,
eingesetzt werden.

Europäisches Patentamt

# EUROPÄISCHER RECHERCHENBERICHT

Nummer der Anmeldung
EP 97 11 7119

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,X | DE 44 43 749 A (WACKER CHEMIE GMBH)<br>* Ansprüche 1-8 * | 1-3 | C08G77/38<br>C09D183/06 |
| X | EP 0 503 668 A (WACKER CHEMIE GMBH)<br>* Ansprüche 1-10 *<br>* Seite 3, Zeile 9 - Seite 5, Zeile 23 *<br>* Seite 12; Beispiel 6 * | 1-3 | |
| A,D | EP 0 508 491 A (WACKER CHEMIE GMBH)<br>* Anspruch 1 * | 1 | |
| A,D | US 5 214 077 A (HERZIG CHRISTIAN ET AL)<br>* Anspruch 1 * | 1 | |
| A | DE 43 25 359 A (WACKER CHEMIE GMBH)<br>* Anspruch 1 * | 1 | |
| A | EP 0 424 960 A (WACKER CHEMIE GMBH)<br>* Ansprüche 1-11 * | 1 | |
| | | | RECHERCHIERTE SACHGEBIETE (Int.Cl.6) |
| | | | C08G<br>C09D |

Der vorliegende Recherchenbericht wurde für alle Patentansprüche erstellt

| Recherchenort | Abschlußdatum der Recherche | Prüfer |
|---|---|---|
| DEN HAAG | 25.November 1997 | Depijper, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)